# FASCICULE DE BREVET EUROPEEN

(11) **EP 2 912 975 B1**
(45) Date de publication et mention de la délivrance du brevet: **16.05.2018**
(21) Numéro de dépôt: 15161485.6
(22) Date de dépôt: 12.07.2011
(51) Int. Cl.: A47J 27/04, A47J 27/05, A47J 36/20

(54) **ELEMENT DE CUISSON POUR CUISEUR VAPEUR**
KOCHELEMENT FÜR DAMPFKOCHTOPF
COOKING ELEMENT FOR STEAM COOKER

(30) Priorité: 13.07.2010 FR 1055738
(43) Date de publication de la demande: 02.09.2015
(62) Demande divisionnaire de: 11743852.3
(73) Titulaire: SEB S.A., 69130 Ecully (FR)
(72) Inventeur: Dumoux, Philippe, 21120 Gemeaux (FR)
(74) Mandataire: Cémeli, Eric Philippe Laurent

(56) Documents cités:
- EP-A1- 2 052 652
- WO-A1-00/30511
- WO-A2-2007/098469
- US-A1- 2005 196 500

## Description

La présente invention concerne le domaine technique des appareils et ustensiles de cuisson à la vapeur.

La présente invention concerne plus particulièrement un élément de cuisson pour cuiseur vapeur. Un tel élément de cuisson est prévu pour être disposé au dessus d'un dispositif de production de vapeur.

Le document WO 00 30511 divulgue un élément de cuisson pour cuiseur vapeur, comportant une paroi latérale tubulaire munie d'un épaulement interne prévu pour recevoir un fond perforé amovible. La paroi latérale et le fond perforé peuvent être réalisés en polycarbonate. Cette matière plastique présente les avantages d'être transparente, d'être très résistante aux chocs, de présenter une résistance mécanique suffisante jusqu'à la température de 100°C, et de ne pas se tacher au contact d'aliments tels que les tomates ou les carottes. De plus cette matière plastique présente un faible retrait, se déforme peu au moulage, est relativement stable dimensionnellement jusqu'à la température de 100°C et présente un prix peu élevé. Toutefois cette matière plastique présente l'inconvénient d'une mauvaise résistance à l'hydrolyse. Cette matière plastique présente également l'inconvénient de contenir du Bisphénol A.

Le document US 5 974 953 divulgue un élément de cuisson pour cuiseur vapeur, comportant un fond perforé portant une paroi latérale tubulaire amovible. Le fond perforé est avantageusement réalisé en acier inoxydable. La paroi latérale tubulaire est réalisée en matière plastique transparente, résistant aux chocs. La partie inférieure de la paroi latérale tubulaire présente un décrochement inférieur interne entouré par un montant annulaire du fond perforé. La paroi latérale tubulaire présente une zone d'appui annulaire entourant le décrochement inférieur interne. Ainsi, seul le décrochement inférieur interne est maintenu extérieurement par le montant annulaire du fond perforé.

Un objet de la présente invention est de proposer un élément de cuisson présentant une paroi latérale tubulaire réalisée au moins partiellement en matière plastique transparente.

Un autre objet de la présente invention est de proposer un élément de cuisson présentant une paroi latérale tubulaire qui ne soit pas susceptible de se tacher au contact d'aliments tels que les tomates ou les carottes.

Un autre objet de la présente invention est de proposer un élément de cuisson présentant une paroi latérale tubulaire présentant une résistance mécanique suffisante jusqu'à la température de 100°C.

Un autre objet de la présente invention est de proposer un élément de cuisson présentant une paroi latérale tubulaire qui soit stable dimensionnellement jusqu'à la température de 100°C.

Un autre objet de la présente invention est de proposer un élément de cuisson présentant une paroi latérale tubulaire qui présente une bonne résistance à l'hydrolyse.

Un autre objet de la présente invention est de proposer un élément de cuisson présentant une paroi latérale tubulaire qui soit exempte d'additifs tels que le Bisphénol A.

Ces objets sont atteints avec un élément de cuisson pour cuiseur vapeur, comportant une paroi latérale tubulaire solidaire d'un organe de support interne ménageant au moins une ouverture prévue pour le passage de la vapeur, l'organe de support interne appartenant à une base portant la paroi latérale tubulaire, ladite base étant réalisée en matière apte à la tenue en flexion sous charge à une température de 100°C, la paroi latérale tubulaire étant réalisée au moins partiellement en matière plastique transparente, du fait que :
- ladite matière plastique transparente est déformable plastiquement en flexion sous charge à une température inférieure ou égale à 100°C,
- la paroi latérale tubulaire est assemblée par surmoulage, sertissage ou clipsage avec la base.

Ainsi des matières plastiques transparentes présentant des propriétés mécaniques de tenue en flexion insuffisantes pour une utilisation dans un cuiseur vapeur peuvent être utilisées pour réaliser une paroi latérale tubulaire travaillant essentiellement en compression, des matières présentant de meilleures propriétés de tenue en flexion, mais non nécessairement transparentes, pouvant être utilisées pour réaliser une base prévue pour porter les aliments. Ces dispositions permettent d'élargir la gamme des matières plastiques susceptibles d'être utilisées pour réaliser la paroi latérale tubulaire de l'élément de cuisson. Les aliments peuvent être placés sur un support additionnel porté par l'organe de support interne, ou pour certains modes de réalisation, directement sur l'organe de support interne. La paroi latérale tubulaire est assemblée par surmoulage, sertissage ou clipsage avec la base. Un assemblage particulièrement solide est ainsi obtenu.

Avantageusement alors, la paroi latérale tubulaire présente des conformations insérées au moins partiellement dans la base et/ou enserrant une partie de la base. Cette disposition permet un meilleur ancrage de la paroi latérale tubulaire dans la base.

Avantageusement encore, la paroi latérale tubulaire comporte des protubérances internes ou externes supportant la base. Cette disposition permet d'éviter de solliciter de manière excessive l'interface entre la paroi latérale tubulaire et la base lorsque l'élément de cuisson est saisi par la paroi latérale tubulaire.

Selon une autre forme d'assemblage, la base est assemblée par verrouillage avec la paroi latérale tubulaire, par exemple par vissage ou par baïonnette.

Avantageusement alors, la paroi latérale tubulaire présente des protubérances extérieures insérées dans des rainures de retenue d'une paroi interne de la base. Cette disposition permet de simplifier le nettoyage de la chambre de cuisson définie par la paroi latérale tubulaire et le fond perforé.

Ces objets sont atteints avec un élément de cuisson pour cuiseur vapeur, comportant une paroi latérale tubulaire solidaire d'un organe de support interne ménageant au moins une ouverture prévue pour le passage de la vapeur, l'organe de support interne appartenant à une base portant la paroi latérale tubulaire, la paroi latérale tubulaire étant réalisée au moins partiellement en matière plastique transparente, du fait que :
- ladite matière plastique transparente est déformable plastiquement en flexion sous charge à une température inférieure ou égale à 100°C,
- ladite base comporte une armature reliée à la paroi latérale tubulaire, ladite armature étant réalisée en matière apte à la tenue en flexion sous charge à une température de 100°C, ladite armature formant au moins partiellement l'organe de support interne.

Selon une autre forme d'assemblage, la paroi latérale tubulaire et la base sont surmoulées sur l'armature.

Avantageusement, une nervure annulaire extérieure entoure la paroi latérale tubulaire. Cette disposition contribue à renforcer la rigidité de la paroi latérale tubulaire. La nervure annulaire extérieure peut être utilisée comme organe de préhension.

Avantageusement alors, la nervure annulaire extérieure est issue d'un bord supérieur de la paroi latérale tubulaire. La nervure annulaire extérieure peut ainsi former un support pour recevoir un autre élément de cuisson. Cette disposition permet également de faciliter le nettoyage.

Selon une forme de réalisation, la base est annulaire et l'organe de support interne porte un fond perforé. La base annulaire définit ainsi une ouverture. La configuration annulaire de la base permet de répartir les efforts subis par l'organe de support dans la base en limitant les efforts sur la paroi latérale annulaire.

Avantageusement alors, le fond perforé est amovible par rapport à la base annulaire. En alternative, le fond perforé pourrait être solidarisé de manière indémontable avec la base annulaire.

Avantageusement alors, le fond perforé, respectivement la base annulaire, présente un organe de retenue prévu pour coopérer avec la base annulaire, respectivement avec le fond perforé, lorsque le fond perforé repose sur l'organe de support interne. Ces dispositions permettent de solidariser de manière amovible le fond perforé et la base annulaire.

Avantageusement encore, l'organe de support interne est formé par un épaulement interne annulaire. Cette disposition permet de mieux répartir les efforts sur la base annulaire.

Selon une autre forme de réalisation, la base forme un fond perforé. L'organe de support interne de la base est ainsi formé par les parties pleines du fond perforé, prévus pour porter les aliments ou un accessoire de support d'aliments.

Selon un mode de réalisation, la paroi latérale tubulaire est réalisée en copolyester, tel que notamment le Tritan™.

Selon un autre mode de réalisation, la paroi latérale tubulaire est réalisée en SAN.

Selon encore un autre mode de réalisation, la paroi latérale tubulaire est réalisée en PMMA.

L'invention sera mieux comprise à l'étude de neuf exemples de réalisation, pris à titre nullement limitatifs, illustrés dans les figures annexées, dans lesquelles :
- la figure 1 est une vue en perspective d'un premier exemple de réalisation d'un élément de cuisson selon l'invention, comportant un montant tubulaire et un fond amovible,
- la figure 2 est une vue partielle en perspective retournée et en coupe du montant tubulaire illustré sur la figure 1,
- la figure 3 est une vue en perspective de la paroi latérale tubulaire du montant tubulaire illustré sur les figures 1 et 2, réalisée en un premier matériau,
- la figure 4 est une vue en perspective de la base du montant tubulaire illustré sur les figures 1 et 2, réalisée en un deuxième matériau,
- la figure 5 est une vue en perspective retournée de la base illustrée sur la figure 4,
- la figure 6 est une vue en perspective assemblée d'un deuxième exemple de réalisation d'un élément de cuisson selon l'invention, comportant un fond perforé lié au montant tubulaire,
- la figure 7 est une vue en perspective de la base de l'élément de cuisson selon l'invention illustré sur la figure 6,
- la figure 8 est une vue en perspective assemblée d'un troisième exemple de réalisation d'un élément de cuisson selon l'invention, comportant un fond perforé lié au montant tubulaire,
- la figure 9 est une vue en perspective assemblée et en coupe du troisième exemple de réalisation d'un élément de cuisson selon l'invention illustré sur la figure 8,
- la figure 10 est une vue en perspective en éclaté d'un quatrième exemple de réalisation d'un élément de cuisson selon l'invention, comportant un montant tubulaire et un fond amovible,
- la figure 11 est une vue partielle en perspective et en éclaté d'un cinquième exemple de réalisation d'un élément de cuisson selon l'invention, comportant un montant tubulaire et un fond amovible,
- la figure 12 est une vue partielle en coupe de la partie inférieure assemblée de l'élément de cuisson illustré sur la figure 11,
- la figure 13 est une vue partielle en coupe de l'élément de cuisson illustré sur la figure 11,
- la figure 14 est une vue partielle en coupe d'un sixième exemple de réalisation d'un élément de cuisson selon l'invention, comportant un fond perforé lié à un montant tubulaire,
- la figure 15 est une vue partielle en coupe d'un septième exemple de réalisation d'un élément de cuisson selon l'invention, comportant un montant tubulaire et un fond amovible,
- la figure 16 est une vue en perspective d'une armature de l'élément de cuisson illustré sur la figure 15,
- la figure 17 est une vue partielle en coupe d'un huitième exemple de réalisation d'un élément de cuisson selon l'invention, comportant un fond perforé lié à un montant tubulaire,
- la figure 18 est une vue en perspective d'une armature de l'élément de cuisson illustré sur la figure 17,
- la figure 19 est une vue partielle en perspective et en éclaté d'un neuvième exemple de réalisation d'un élément de cuisson selon l'invention, comportant un montant tubulaire et un fond amovible, complété d'un autre montant tubulaire appartenant à un ensemble de cuisson,
- la figure 20 est une vue partielle en coupe montrant l'assemblage de l'élément de cuisson et de l'autre montant tubulaire illustrés sur la figure 19.

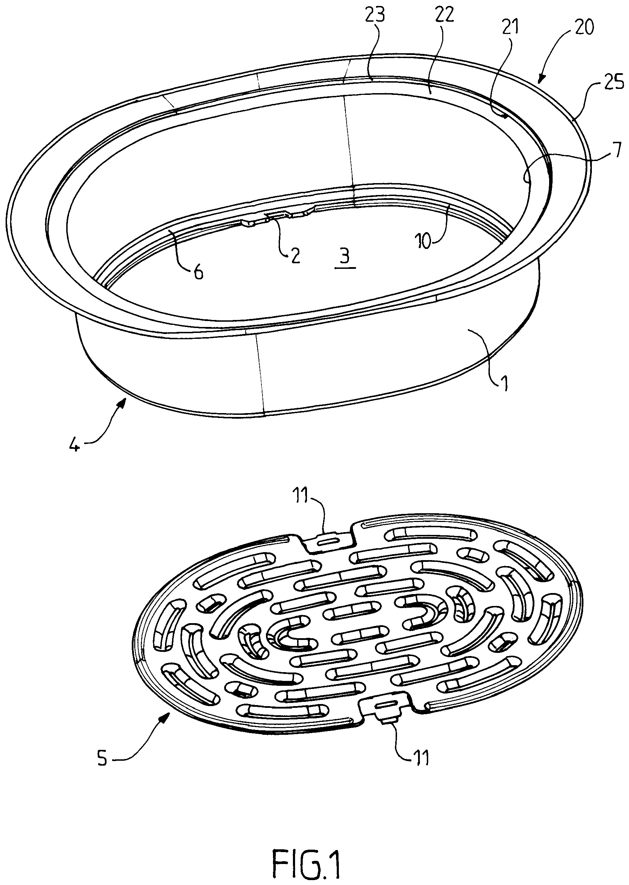

La figure 1 illustre un premier exemple de réalisation d'un élément de cuisson pour cuiseur vapeur, comportant une paroi latérale tubulaire 1 solidaire d'un organe de support interne 2 ménageant au moins une ouverture 3 prévue pour le passage de la vapeur.

La paroi latérale tubulaire 1 et l'organe de support interne 2 appartiennent à un un montant tubulaire 4 prévu pour porter un fond perforé 5 amovible.

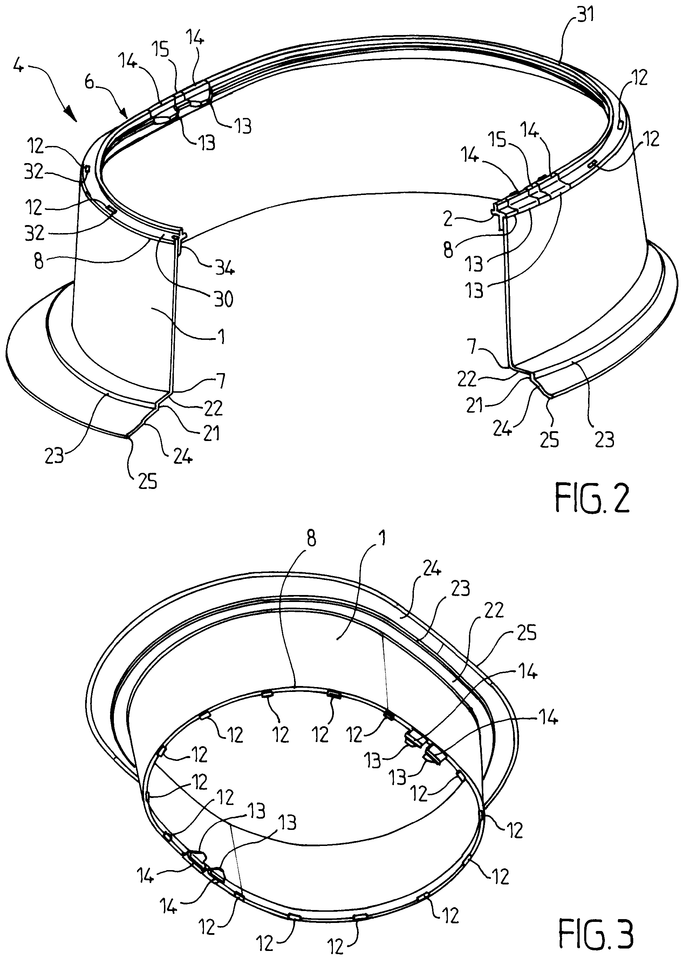

La paroi latérale tubulaire 1 présente un bord supérieur 7 et un bord inférieur 8, mieux visibles sur la figure 2.

La paroi latérale tubulaire 1 est réalisée au moins partiellement en matière plastique transparente, et de préférence, est réalisée entièrement en matière plastique transparente.

La paroi latérale tubulaire 1 peut notamment être réalisée en Tritan™ (copolyester fabriqué par la société Eastmann), en SAN (Styrène acrylonitrile), ou en PMMA (Polyméthacrylate de méthyle), ces matières présentant l'avantage d'offrir une bonne transparence, d'être peu sensibles au tachage par les aliments, d'être peu sensibles à l'hydrolyse, et d'être exemptes de Bisphénol A. Des essais ont en effet montré que l'utilisation de matières plastiques transparentes déformables plastiquement en flexion sous charge à une température inférieure ou égale à 100°C pouvait être envisagée pour la réalisation de la paroi latérale tubulaire 1.

Pour améliorer la tenue mécanique de la paroi latérale tubulaire 1, l'épaisseur de la paroi latérale tubulaire 1 peut être augmentée au-delà de 2 mm. Cette disposition permet également de réduire la température de la face extérieure de la la paroi latérale tubulaire 1.

Pour limiter la déformation de la paroi latérale tubulaire 1, une nervure annulaire extérieure 20 entoure la paroi latérale tubulaire 1. La nervure annulaire extérieure 20 est exposée à la température ambiante, et non à la température régnant à l'intérieur de la paroi latérale tubulaire 1, ce qui permet d'augmenter la résistance mécanique de la nervure annulaire extérieure 20.

Avantageusement, la nervure annulaire extérieure 20 entoure la partie supérieure de la paroi latérale tubulaire 1. Si désiré, plusieurs nervures annulaires extérieures peuvent être utilisées.

Tel que représenté sur la figure 1, la nervure annulaire extérieure 20 présente un décrochement annulaire 21. La nervure annulaire extérieure 20 comprend ainsi une partie intérieure 22 s'étendant entre la paroi latérale tubulaire 1 et un montant annulaire 23 formant le décrochement annulaire 21, et une partie extérieure 24 s'étendant entre le montant annulaire 23 et un bord extérieur 25. Un autre élément de cuisson ou un couvercle peut ainsi être disposé sur le décrochement annulaire 21 ou sur la partie intérieure 22. La paroi latérale tubulaire 1 est alors sollicitée en compression. Plus particulièrement, la nervure annulaire extérieure 20 est issue du bord supérieur 7 de la paroi latérale tubulaire 1. La partie intérieure 22 s'étend transversalement par rapport à la paroi latérale tubulaire 1. La partie extérieure 24 est relevée.

L'organe de support interne 2 porte le fond perforé 5. Plus particulièrement, l'organe de support interne 2 est formé par un épaulement interne annulaire 10.

Pour éviter une sollicitation mécanique trop importante en flexion de la paroi latérale tubulaire 1, l'organe de support interne 2 appartient à une base 6 portant la paroi latérale tubulaire 1, ladite base 6 étant réalisée en matière apte à la tenue en flexion sous charge à une température de 100°C. La base 6 n'est pas nécessairement réalisée en matériau transparent, l'utilisateur pouvant observer le contenu de l'élément de cuisson par la paroi latérale tubulaire 1. La base 6 peut notamment être réalisée en PBT (Polybutylène Téréphthalate), ou encore en PP (Polypropylène).

Dans l'exemple de réalisation illustré sur les figures 1 à 5, la base 6 est annulaire. Tel que visible sur la figure 2, la base 6 présente un corps annulaire 30, une nervure annulaire inférieure 31 et une nervure annulaire supérieure 34. La nervure annulaire supérieure 34 et la nervure annulaire inférieure 31 sont issues du corps annulaire 30. Des languettes internes 33 issues du corps annulaire 30 s'étendent vers l'ouverture 3 de la base 6.

Tel que visible sur la figure 2, la nervure annulaire supérieure 34 est agencée à l'intérieur de la paroi latérale tubulaire 1.

La paroi latérale tubulaire 1 est assemblée par surmoulage avec la base 6 pour former le montant tubulaire 4 associé au fond perforé 5 amovible. A cet effet, tel que visible sur la figure 2, la paroi latérale tubulaire 1 présente des conformations 12 insérées au moins partiellement dans la base 6. Tel que visible sur la figure 3, les conformations 12 sont en relief et sont issues du bord inférieur 8 de la paroi latérale tubulaire 1. Plus particulièrement, les conformations 12 sont des conformations inférieures s'étendant en dessous du bord inférieur 8 de la paroi latérale tubulaire 1.

Par ailleurs, tel que visible sur la figure 2, la paroi latérale tubulaire 1 comporte des protubérances internes 13 supportant la base 6 lorsque l'élément de cuisson est soulevé par l'intermédiaire de la paroi latérale tubulaire 1. Tel que visible sur la figure 3, les protubérances internes 13 s'étendent vers l'intérieur de la paroi latérale tubulaire 1. Sur chaque côté de la partie inférieure de la paroi latérale tubulaire 1 deux protubérances internes 13 enserrent une partie 15 de la base 6.

A titre de variante, la paroi latérale tubulaire 1 pourrait présenter des conformations 12 en creux enserrant une partie de la base 6.

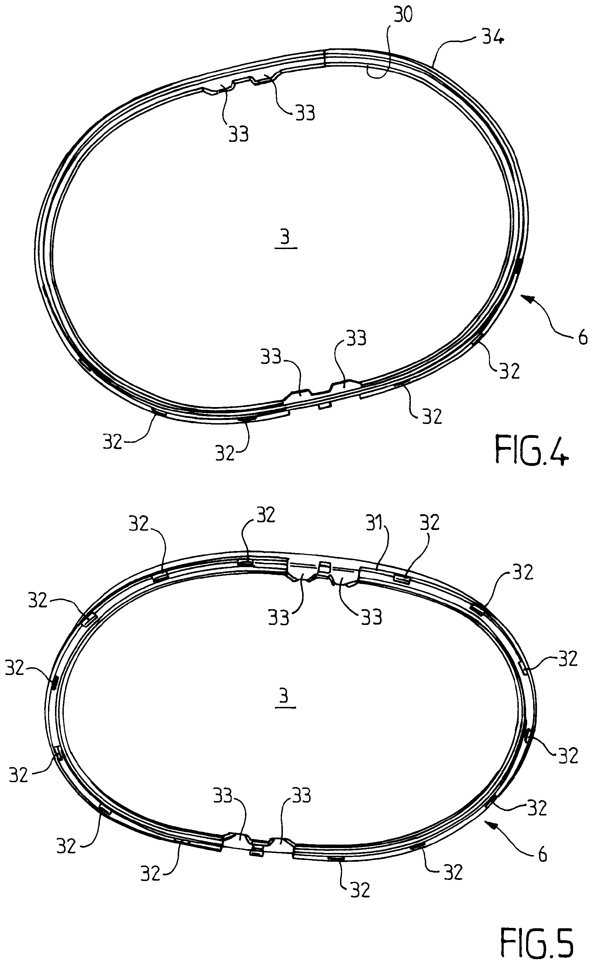

Tel que visible sur les figures 4 et 5, la base 6 présente des logements 32 prévus pour recevoir les conformations 12. Les logements 32 forment des passages traversant le corps annulaire 30. Les logements 32 sont agencés autour de la nervure annulaire supérieure 34. Les logements 32 sont agencés autour de la nervure annulaire inférieure 31. Tel que visible sur la figure 3, les logements 32 enserrent latéralement les conformations 12.

La nervure annulaire inférieure 31 est interrompue au niveau de languettes internes 33 s'étendant vers l'ouverture 3 de la base 6. Les languettes internes 33 reposent sur les protubérances internes 13 de la paroi latérale tubulaire 1. Tel que visible sur la figure 2, les protubérances internes 13 présentent une nervure inférieure 14 prolongeant la nervure annulaire inférieure 31 sous les languettes internes 33. Le montant tubulaire 4 présente ainsi une nervure annulaire inférieure continue.

La nervure annulaire supérieure 34 permet de rigidifier la base 6. La nervure annulaire inférieure 31 et les nervures inférieures 14 contribuent également à rigidifier la base 6. Le corps annulaire 30 de la base 6 porte le bord inférieur 8 de la paroi latérale tubulaire 1. Les protubérances internes 13 de la paroi latérale tubulaire 1 portent les languettes internes 33 de la base 6. Une bonne cohésion mécanique du montant tubulaire 4 est ainsi obtenue entre la base 6 et la paroi latérale tubulaire 1.

Si désiré, le fond perforé 5 peut présenter au moins un organe de retenue 11 prévu pour coopérer avec la base 6 annulaire, lorsque le fond perforé 5 repose sur l'organe de support interne 2. Tel que représenté sur la figure 1, le fond perforé 5 présente deux organes de retenue 11 opposés. Ainsi le fond perforé 5 est amovible par rapport à la base 6 annulaire, tout en étant solidaire de la base 6 annulaire.

A titre de variante, non représentée aux figures, la base 6 annulaire peut présenter au moins un organe de retenue prévu pour coopérer avec le fond perforé 5, lorsque le fond perforé 5 repose sur l'organe de support interne 2.

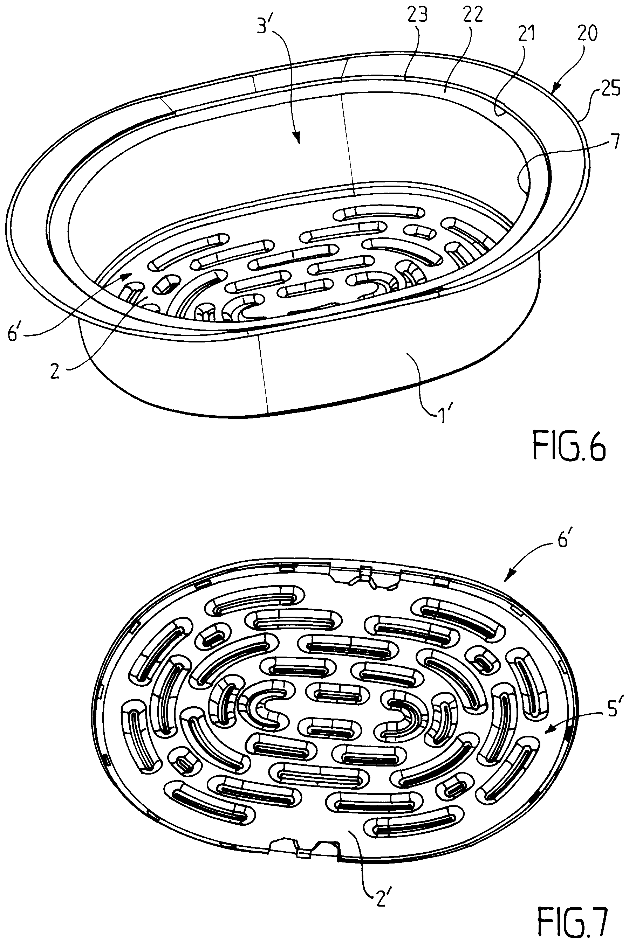

L'exemple de réalisation illustré sur les figures 6 et 7 comporte une paroi latérale tubulaire 1' solidaire d'un organe de support interne 2' appartenant à une base 6'. La paroi latérale tubulaire 1' peut être identique à la paroi latérale tubulaire 1. La base 6' est assemblée par surmoulage avec la paroi latérale tubulaire 1' pour former un élément de cuisson monobloc.

L'exemple de réalisation illustré sur les figures 6 et 7 diffère de l'exemple de réalisation illustré sur les figures 1 à 5 en ce que la base 6' forme un fond perforé 5' prévu pour recevoir les aliments, si désiré placés dans un réceptacle ou sur un support accessoire.

Ainsi le fond perforé 5' constitue l'organe de support interne 2' ménageant au moins une ouverture 3' prévue pour le passage de la vapeur. De préférence le fond perforé 5' présente une pluralité d'ouvertures 3', tel que mieux visible sur la figure 7. La base 6' peut notamment être réalisée en PBT, ou encore en PP.

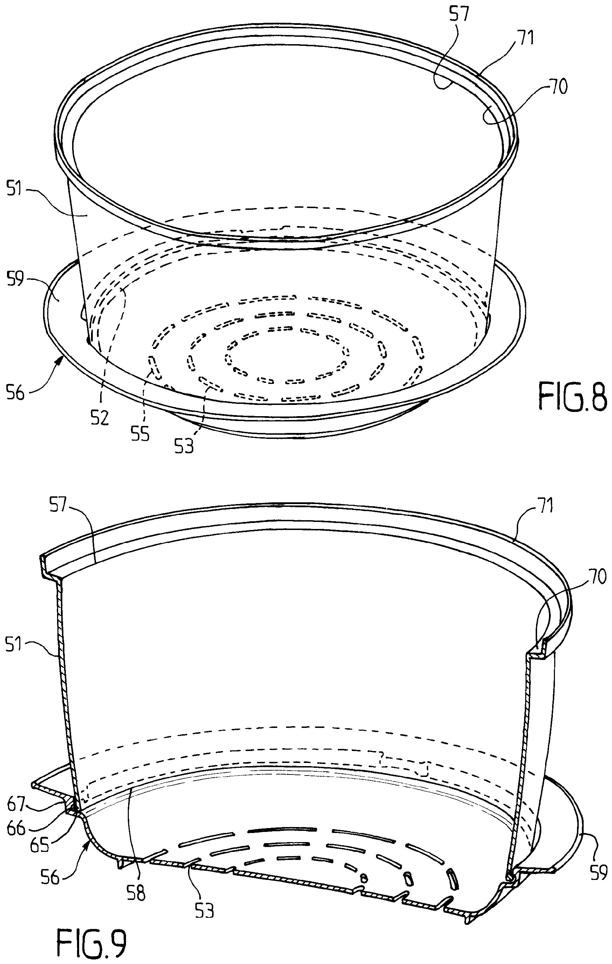

L'exemple de réalisation illustré sur les figures 8 et 9 comporte une paroi latérale tubulaire 51 solidaire d'un organe de support interne 52 appartenant à une base 56. La paroi latérale tubulaire 51 présente un bord inférieur 58.

La base 56 forme un fond perforé 55 prévu pour recevoir les aliments, constituant l'organe de support interne 52 ménageant au moins une ouverture 53 prévue pour le passage de la vapeur. La base 56 présente une collerette annulaire 59 entourant le fond perforé 55. La collerette annulaire 59 s'étend autour de la paroi latérale tubulaire 51.

La paroi latérale tubulaire 51 présente un bord supérieur 57 et un bord inférieur 58.

L'exemple de réalisation illustré sur les figures 8 et 9 diffère de l'exemple de réalisation illustré sur les figures 6 et 7 en ce que la base 56 est assemblée par verrouillage avec la paroi latérale tubulaire 51.

Plus particulièrement, la paroi latérale tubulaire 51 présente des protubérances extérieures 65 insérées dans des rainures de retenue 66 d'une paroi interne 67 de la base 56. Tel que représenté sur les figures 8 et 9, la base 56 est verrouillée par baïonnette avec la paroi latérale tubulaire 51. Cette disposition permet de rendre solidaire la paroi latérale tubulaire 51 avec l'organe de support interne 52 appartenant à la base 56. Par ailleurs, la paroi interne 67 de la base 56 enserre la partie inférieure de la paroi latérale tubulaire 51.

Une nervure annulaire extérieure 70 est issue du bord supérieur 57 de la paroi latérale tubulaire 51. La nervure annulaire extérieure 70 entoure la paroi latérale tubulaire 51. La nervure annulaire extérieure 70 est prolongée par un bord supérieur relevé 71.

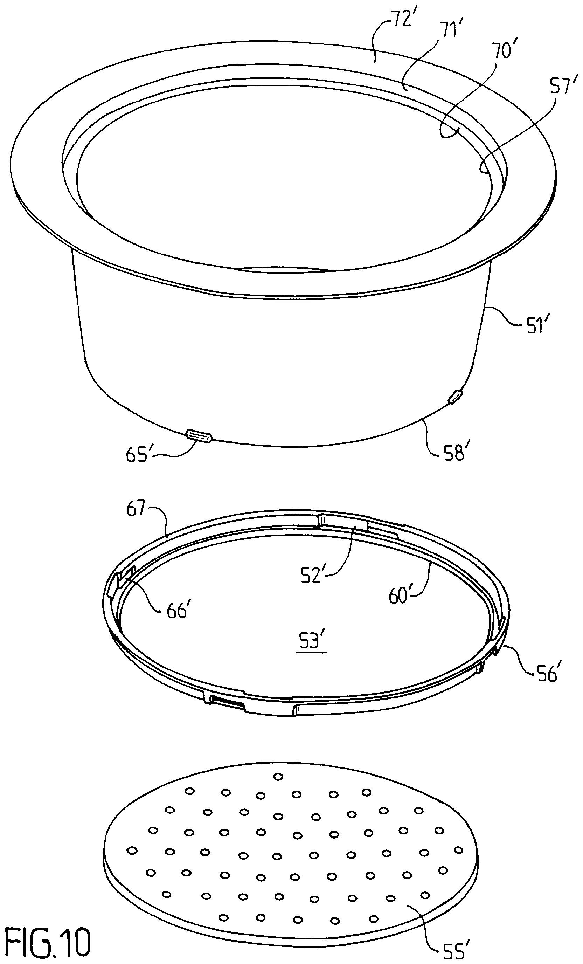

L'exemple de réalisation illustré sur la figure 10 comporte une paroi latérale tubulaire 51' solidaire d'un organe de support interne 52' appartenant à une base 56'. La paroi latérale tubulaire 51' présente un bord inférieur 58'.

L'exemple de réalisation illustré sur la figure 10 diffère de l'exemple de réalisation illustré sur les figures 8 et 9 en ce que la base 56' est annulaire et en ce que l'organe de support interne 52' porte un fond perforé 55' amovible. L'organe de support interne 52' ménage ainsi une ouverture 53' prévue pour le passage de la vapeur. Plus particulièrement, l'organe de support interne 52' est formé par un épaulement interne annulaire 60'.

Plus particulièrement, la paroi latérale tubulaire 51' présente des protubérances extérieures 65' insérées dans des rainures de retenue 66' d'une paroi interne 67' de la base 56' annulaire. Tel que représenté sur la figure 10, la base 56' annulaire est verrouillée par baïonnette avec la paroi latérale tubulaire 51'.

Une nervure annulaire extérieure 70' est issue du bord supérieur 57' de la paroi latérale tubulaire 51'. La nervure annulaire extérieure 70' est prolongée par un montant 71'. Un bord extérieur 72' entoure la partie supérieure du montant 71'.

A titre de variante, la base 56 ; 56' n'est pas nécessairement verrouillée par baïonnette avec la paroi latérale tubulaire 51 ; 51'. En alternative, la base 56 ; 56' pourrait notamment être verrouillée par vissage avec la paroi latérale tubulaire 51 ; 51'.

A titre de variante, le fond perforé 55', respectivement la base 56' annulaire, peut présenter au moins un organe de retenue prévu pour coopérer avec la base 56' annulaire, respectivement avec le fond perforé 55', lorsque le fond perforé 55' repose sur l'organe de support interne 52'.

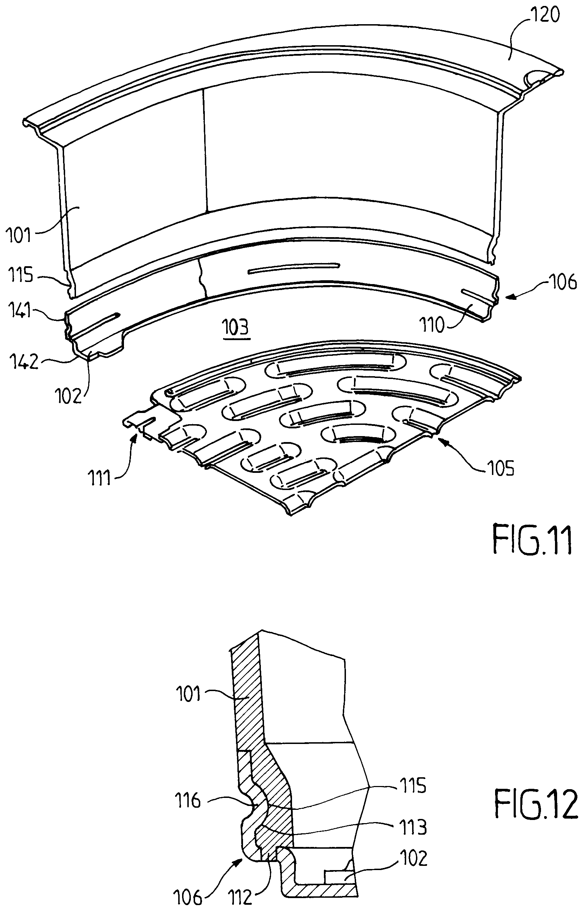

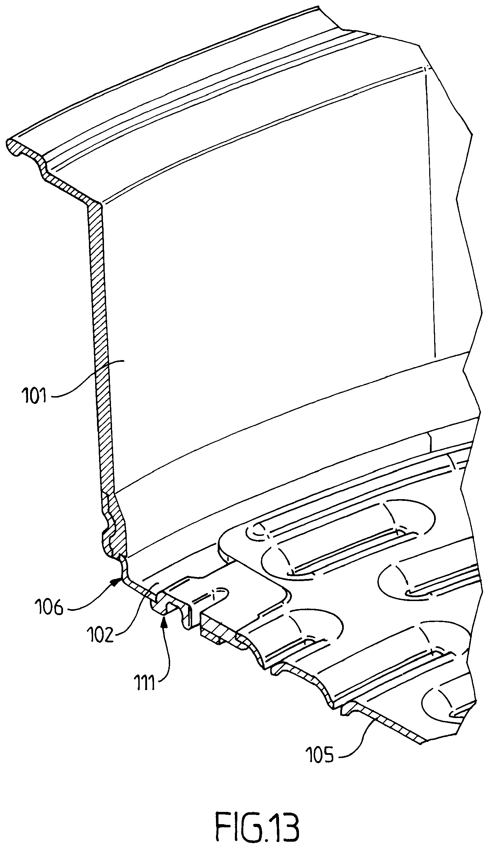

L'exemple de réalisation illustré sur les figures 11 à 13 comporte une paroi latérale tubulaire 101 solidaire d'un organe de support interne 102 portant un fond perforé 105 amovible. L'organe de support interne 102 appartient ainsi à une base 106 annulaire et ménage une ouverture 103 prévue pour le passage de la vapeur. L'organe de support interne 102 est formé par un épaulement interne annulaire 110 de la base 106. Le fond perforé 105 amovible présente au moins un organe de retenue 111 prévu pour coopérer avec la base 106 lorsque le fond perforé 105 repose sur l'organe de support interne 102, tel que visible sur la figure 13.

L'exemple de réalisation illustré sur les figures 11 à 13 diffère de l'exemple de réalisation illustré sur les figures 1 à 5 en ce que la base 106 est assemblée par sertissage ou par clipsage avec la paroi latérale tubulaire 101. La base 106 présente ainsi une structure en L avec une branche supérieure 141 reliée à une branche radiale interne 142. La branche supérieure 141 enserre la partie inférieure de la paroi latérale tubulaire 101. La branche radiale interne 142 constitue un épaulement interne annulaire 110 formant l'organe de support interne 102. La base 106 peut par exemple être réalisée en métal, notamment en aluminium, si désiré revêtu, ou en acier, en particulier en acier inoxydable.

Plus particulièrement, la paroi latérale tubulaire 101 présente des conformations 112 insérées au moins partiellement dans la base 106, tel que mieux visible sur la figure 12. La paroi latérale tubulaire 101 présente aussi des conformations de retenue extérieures 115 dans lesquelles sont insérées des nervures de retenue 116 d'une paroi interne de la base 106. La paroi latérale tubulaire 101 comporte ainsi des protubérances externes 113 supportant la base 106.

Pour rigidifier la partie haute de la paroi latérale tubulaire 101, une nervure annulaire extérieure 120 entoure la paroi latérale tubulaire 101. La nervure annulaire extérieure 120 est issue d'un bord supérieur 107 de la paroi latérale tubulaire 101.

A titre de variante, non représentée aux figures, la base 106 annulaire peut présenter au moins un organe de retenue prévu pour coopérer avec le fond perforé 105, lorsque le fond perforé 105 repose sur l'organe de support interne 102.

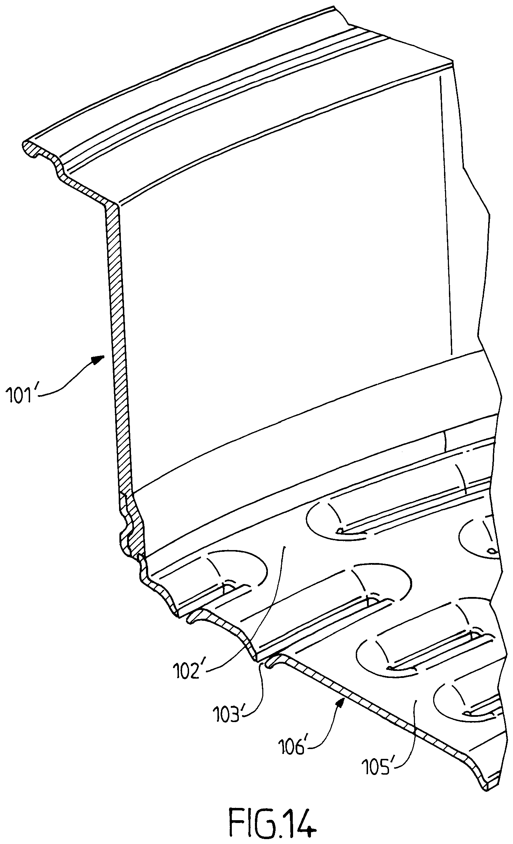

L'exemple de réalisation illustré sur la figure 14 concerne un élément de cuisson monobloc et diffère de l'exemple de réalisation illustré sur les figures 11 à 13 en ce que l'organe de support interne 102' appartient à une base 106' formant un fond perforé 105' prévu pour recevoir les aliments, si désiré placés dans un réceptacle ou sur un support accessoire. L'organe de support interne 102' ménage ainsi une pluralité d'ouvertures 103' prévues pour le passage de la vapeur. La paroi latérale tubulaire 101' représentée sur la figure 14 est identique à la paroi tubulaire 101.

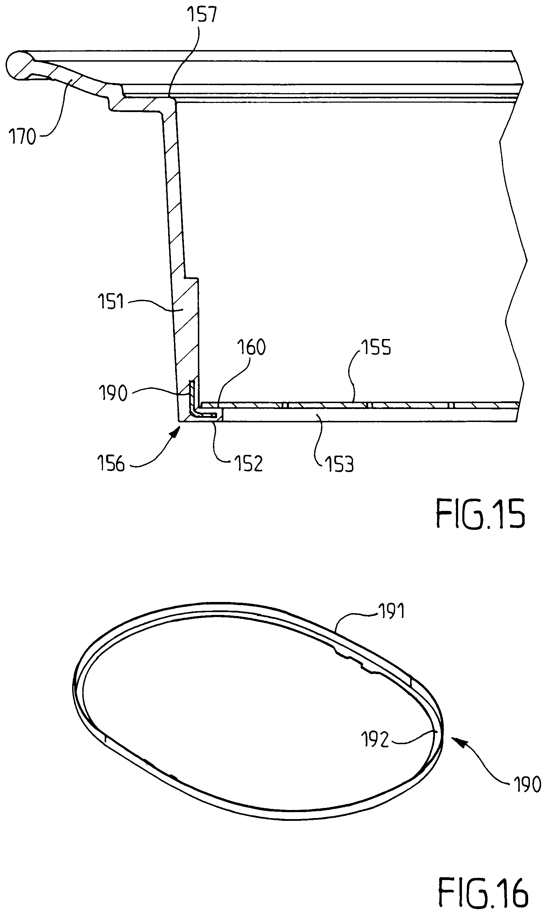

L'exemple de réalisation illustré sur les figures 15 et 16 comporte une paroi latérale tubulaire 151 solidaire d'un organe de support interne 152 portant un fond perforé 155 amovible. L'organe de support interne 152 appartient ainsi à une base 156 annulaire. L'organe de support interne 152 ménage une ouverture 153 prévue pour le passage de la vapeur. L'organe de support interne 152 est formé par un épaulement interne annulaire 160 de la base 156.

L'exemple de réalisation illustré sur les figures 15 et 16 diffère de l'exemple de réalisation illustré sur les figures 1 à 5 en ce que la base 156 comporte une armature 190 reliée à la paroi latérale tubulaire 151, l'armature 190 étant réalisée en matière apte à la tenue en flexion sous charge à une température de 100°C. Ainsi la base 156 peut être au moins partiellement réalisée en matière ne présentant pas une tenue satisfaisante à la flexion sous charge à une température inférieure ou égale à 100°C, par exemple en utilisant la même matière que pour la paroi latérale tubulaire 151.

Tel que mieux visible sur la figure 16, l'armature 190 est avantageusement annulaire et présente un profil en L avec une branche supérieure 191 reliée à une branche radiale interne 192. L'armature 190 peut par exemple être réalisée en aluminium ou en acier, notamment en acier inoxydable. La paroi latérale tubulaire 151 et la base 156 sont surmoulées sur l'armature 190, pour que la paroi latérale tubulaire 151 soit solidaire de l'organe de support interne 152 portant le fond perforé 155 amovible.

Tel que représenté sur la figure 15, le fond perforé 155 repose sur l'épaulement interne annulaire 160 réalisé dans la matière utilisée pour le surmoulage.

A titre de variante, le fond perforé 155 pourrait reposer directement sur l'armature 190. L'armature 190 forme alors l'organe de support interne 152.

Pour rigidifier la partie haute de la paroi latérale tubulaire 151, une nervure annulaire extérieure 170 entoure la paroi latérale tubulaire 151. La nervure annulaire extérieure 170 est issue d'un bord supérieur 157 de la paroi latérale tubulaire 151.

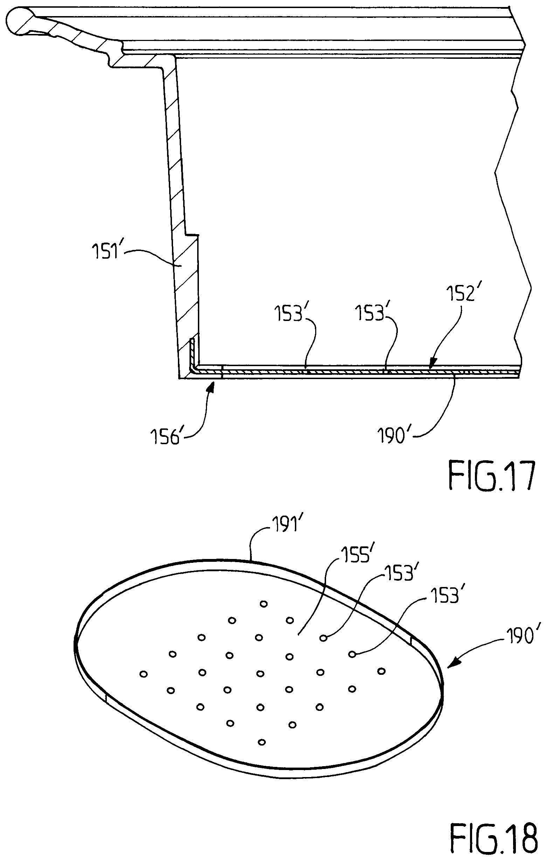

L'exemple de réalisation illustré sur la figure 17 concerne un élément de cuisson monobloc, dans lequel la paroi latérale tubulaire 151' est identique à la paroi tubulaire 151. Cet exemple de réalisation diffère de l'exemple de réalisation illustré sur les figures 15 et 16 en ce que la base 156' comporte une armature 190' formant un fond perforé 155' prévu pour recevoir les aliments, si désiré placés dans un réceptacle ou sur un support accessoire. L'armature 190' forme ainsi l'organe de support 152' de la base 156'.

Tel que mieux visible sur la figure 18, l'armature 190' comporte une branche supérieure 191' identique à la branche supérieure 191 de l'armature 190. La branche supérieure 191' entoure le fond perforé 155' ménageant une pluralité d'ouvertures 153' prévues pour le passage de la vapeur.

A titre de variante, l'organe de support interne 2, 52', 102, 152 n'est pas nécessairement formé par un épaulement interne annulaire, mais pourrait par exemple présenter des zones d'appui discontinues.

A titre de variante, le fond perforé 5 ; 105 reposant sur l'organe de support interne 2 ; 102 pourrait être dépourvu d'organe de retenue 11 ; 111.

A titre de variante, le fond perforé 55' ; 155, respectivement la base 56' ; 156 annulaire pourrait présenter un organe de retenue prévu pour coopérer avec la base 56' ; 156 annulaire, respectivement avec le fond perforé 55' ; 155, lorsque le fond perforé 55' ; 155 repose sur l'organe de support interne 52' ; 152.

A titre de variante, la base 6 ; 6' ; 56 ; 56' n'est pas nécessairement réalisée en matière plastique et pourrait être réalisée au moins partiellement en métal ; la base 106 ; 106' ; 156 ; 156' n'est pas nécessairement réalisée en métal et pourrait être réalisée au moins partiellement en matière plastique.

A titre de variante, la paroi latérale tubulaire 1 ; 1' ; 51 ; 51', 101; 101'; 151; 151' pourrait comporter une ou plusieurs nervures internes et/ou externes s'étendant sur au moins une partie de la hauteur de ladite paroi latérale tubulaire, pour rigidifier ladite paroi latérale tubulaire.

A titre de variante, la paroi interne 67 ; 67' de la base 56 ; 56' pourrait enserrer annulairement la partie inférieure de la paroi latérale tubulaire 51 ; 51'.

Selon un autre aspect de l'invention concernant un élément de cuisson pour cuiseur vapeur comportant une paroi latérale tubulaire 51 ; 51' reposant sur une base 56 ; 56', la paroi interne 67 ; 67' de la base 56 ; 56' enserre la partie inférieure de la paroi latérale tubulaire 51 ; 51'. Cette disposition permet de maintenir latéralement la paroi latérale tubulaire 51 ; 51' et de limiter la déformation sous charge de la paroi latérale tubulaire 51 ; 51'. De préférence, la paroi interne 67 ; 67' de la base 56 ; 56' enserre la partie inférieure de la paroi latérale tubulaire 51 ; 51' de manière discontinue, afin d'éviter le coincement de la paroi latérale tubulaire 51 ; 51' à l'intérieur de la base 56 ; 56'. Plus particulièrement, la paroi interne 67 ; 67' de la base 56 ; 56' peut enserrer la partie inférieure de la paroi latérale tubulaire 51 ; 51' au niveau des protubérances extérieures 65 ; 65' et/ou entre les protubérances extérieures 65 ; 65'.

A titre de variante, la paroi latérale tubulaire 51 ; 51' n'est pas nécessairement verrouillée avec la base 56 ; 56', la paroi latérale tubulaire 51 ; 51' peut être dépourvue de protubérances extérieures 65 ; 65' et la paroi interne 67 ; 67' de la base 56 ; 56' peut être dépourvue de rainures de retenue 66 ; 66'. De préférence alors, la paroi latérale tubulaire 51 ; 51' comporte au moins un organe de préhension, formé par exemple par une collerette annulaire 59, ou encore par deux protubérances opposées.

L'élément de cuisson selon le troisième exemple de réalisation ou modifié selon la variante ci-dessus comporte ainsi la paroi latérale tubulaire 51 présentant un bord inférieur reposant sur la base 56 formant le fond perforé 55. La paroi latérale tubulaire 51 est réalisée au moins partiellement en matière plastique transparente déformable plastiquement en flexion sous charge à une température inférieure ou égale à 100°C. La base 56 maintient extérieurement une partie inférieure de la paroi latérale tubulaire 51 au dessus du bord inférieur de la paroi latérale tubulaire 51, du fait que la paroi interne 67 de la base 56 enserre la partie inférieure de la paroi latérale tubulaire 51.

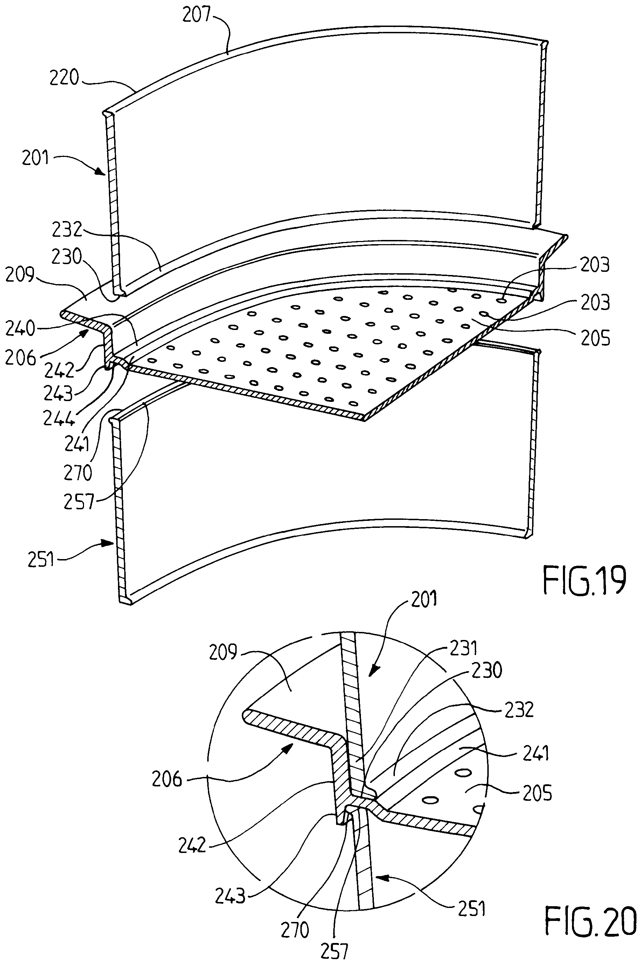

L'exemple de réalisation illustré sur les figures 19 et 20 concerne également un élément de cuisson pour cuiseur vapeur, comportant une paroi latérale tubulaire 201 présentant un bord inférieur 230 reposant sur une base 206, formant un fond perforé 205, dans lequel la paroi latérale tubulaire 201 est réalisée au moins partiellement en matière plastique transparente déformable plastiquement en flexion sous charge à une température inférieure ou égale à 100°C. La base 206 maintient extérieurement une partie inférieure 231 de la paroi latérale tubulaire 201 au dessus du bord inférieur 230.

La paroi latérale tubulaire 201 présente une nervure annulaire intérieure 232. Plus particulièrement, la nervure annulaire intérieure 232 est issue du bord inférieur 230 de la paroi latérale tubulaire 201. Tel que montré sur la figure 20, la nervure annulaire intérieure 232 est entourée par la base 206 lorsque la paroi latérale tubulaire 201 repose sur la base 206.

Une nervure annulaire extérieure 220 entoure la paroi latérale tubulaire 201. Plus particulièrement, la nervure annulaire extérieure 220 est issue d'un bord supérieur 207 de la paroi latérale tubulaire 201.

Le fond perforé 205 de la base 206 présente une pluralité d'ouvertures 203 prévues pour le passage de la vapeur. Le fond perforé 205 est entouré par une zone annulaire supérieure d'appui 240 prévue pour recevoir le bord inférieur 230 de la paroi latérale tubulaire 201. La zone annulaire supérieure d'appui 240 est reliée au fond perforé 205 par un décrochement 241. Ainsi tel que montré sur la figure 20, la paroi latérale tubulaire 201 repose sur la zone annulaire supérieure d'appui 240 de la base 206 décalée par rapport au fond perforé 205 de la base 206. Un montant supérieur 242 entoure la zone annulaire supérieure d'appui 240.

La base 206 présente une collerette annulaire 209 entourant le fond perforé 205. Plus particulièrement, la collerette annulaire 209 est issue du montant supérieur 242. La collerette annulaire 209 forme un organe de préhension permettant de déplacer l'élément de cuisson formé par la base 206 et la paroi latérale tubulaire 201.

L'élément de cuisson formé par la base 206 et la paroi latérale tubulaire 201 peut être associé à un autre élément de cuisson, si désiré du même type, pour former un ensemble de cuisson étagé.

Les figures 19 et 20 illustrent un ensemble de cuisson comportant un élément de cuisson formé par la base 206 et la paroi latérale tubulaire 201 ainsi qu'une autre paroi latérale tubulaire 251 prévue pour porter la base 206 de l'élément de cuisson. L'autre paroi latérale tubulaire 251 est avantageusement identique à la paroi latérale tubulaire 201 et peut être réalisée au moins partiellement en matière plastique transparente déformable plastiquement en flexion sous charge à une température inférieure ou égale à 100°C.

Tel que représenté sur la figure 20, la base 206 maintient extérieurement une partie supérieure de l'autre paroi latérale tubulaire 251 lorsque la base 206 repose sur l'autre paroi latérale tubulaire 251. A cet effet la base 206 comporte un montant inférieur 243 entourant une zone inférieure d'appui 244 prévue pour reposer sur l'autre paroi latérale tubulaire 251.

Selon une disposition préférée, la paroi latérale tubulaire 201 repose sur la base 206 au dessus de l'autre paroi latérale tubulaire 251. La base 206 est ainsi sollicitée en compression entre la paroi latérale tubulaire 201 et l'autre paroi latérale tubulaire 251, plutôt qu'en flexion.

Plus particulièrement, l'autre paroi latérale tubulaire 251 présente une nervure annulaire extérieure 270 entourée par la base 206 lorsque la base 206 repose sur l'autre paroi latérale tubulaire 251. De même que pour la paroi latérale tubulaire 201, la nervure annulaire extérieure 270 de l'autre paroi latérale tubulaire 251 est issue d'un bord supérieur 257 de l'autre paroi latérale tubulaire 251.

Les exemples de réalisation proposés permettent ainsi de repousser la température limite d'utilisation de matériaux plastiques présentant des propriétés mécaniques limitées, en contrôlant mieux le flambage sous charge d'une paroi tubulaire.

La présente invention n'est nullement limitée aux exemples de réalisation décrits et à leurs variantes, mais englobe de nombreuses modifications dans le cadre des revendications.

## Revendications

1. Elément de cuisson pour cuiseur vapeur, comportant une paroi latérale tubulaire (1 ; 1' ; 51 ; 51' ; 101 ; 101') solidaire d'un organe de support interne (2 ; 2' ; 52 ; 52' ; 102 ; 102') ménageant au moins une ouverture (3 ; 3' ; 53 ; 53' ; 103 ; 103') prévue pour le passage de la vapeur, l'organe de support interne (2 ; 2' ; 52 ; 52' ; 102 ; 102') appartenant à une base (6 ; 6' ; 56 ; 56' ; 106 ; 106') portant la paroi latérale tubulaire (1 ; 1' ; 51 ; 51' ; 101 ; 101'), ladite base (6 ; 6' ; 56 ; 56' ; 106 ; 106') étant réalisée en matière apte à la tenue en flexion sous charge à une température de 100°C, la paroi latérale tubulaire (1 ; 1' ; 51 ; 51' ; 101 ; 101') étant réalisée au moins partiellement en matière plastique transparente, **caractérisé :**
- **en ce que** ladite matière plastique transparente est déformable plastiquement en flexion sous charge à une température inférieure ou égale à 100°C,
- et **en ce que** la paroi latérale tubulaire (1 ; 1' ; 101 ; 101') est assemblée par surmoulage, sertissage ou clipsage avec la base (6 ; 6' ; 106 ; 106').

2. Elément de cuisson selon la revendication 1, **caractérisé en ce que** la paroi latérale tubulaire (1 ; 1' ; 101 ; 101') présente des conformations (12 ; 112) insérées au moins partiellement dans la base (6 ; 6' ; 106 ; 106') et/ou enserrant une partie de la base (6 ; 6' ; 106 ; 106').

3. Elément de cuisson selon l'une des revendications 1 ou 2, **caractérisé en ce que** la paroi latérale tubulaire (1 ; 1' ; 101 ; 101') comporte des protubérances internes ou externes (13 ; 113) supportant la base (6 ; 6' ; 106 ; 106').

4. Elément de cuisson selon l'une des revendications 1 à 3, **caractérisé en ce que** la base (56 ; 56') est assemblée par verrouillage avec la paroi latérale tubulaire (51 ; 51').

5. Elément de cuisson selon la revendication 4, **caractérisé en ce que** la paroi latérale tubulaire (51 ; 51') présente des protubérances extérieures (65 ; 65') insérées dans des rainures de retenue (66 ; 66') d'une paroi interne (67 ; 67') de la base (56 ; 56').

6. Elément de cuisson pour cuiseur vapeur, comportant une paroi latérale tubulaire (151 ; 151') solidaire d'un organe de support interne (152 ; 152') ménageant au moins une ouverture (153 ; 153') prévue pour le passage de la vapeur, l'organe de support interne (152 ; 152') appartenant à une base (156 ; 156') portant la paroi latérale tubulaire (151 ; 151'), la paroi latérale tubulaire (151 ; 151') étant réalisée au moins partiellement en matière plastique transparente, **caractérisé :**
- **en ce que** ladite matière plastique transparente est déformable plastiquement en flexion sous charge à une température inférieure ou égale à 100°C,
- **en ce que** ladite base (156 ; 156') comporte une armature (190 ; 190') reliée à la paroi latérale tubulaire (151 ; 151'), ladite armature (190 ; 190') étant réalisée en matière apte à la tenue en flexion sous charge à une température de 100°C, ladite armature (190 ; 190') formant au moins partiellement l'organe de support interne (152 ; 152').

7. Elément de cuisson selon la revendication 6, **caractérisé en ce que** la paroi latérale tubulaire (151 ; 151') et la base (156 ; 156') sont surmoulées sur l'armature (190 ; 190').

8. Elément de cuisson selon l'une des revendications 1 à 7, **caractérisé en ce qu'**une nervure annulaire extérieure (20 ; 70 ; 70' ; 120 ; 170) entoure la paroi latérale tubulaire (1 ; 1' ; 51 ; 51' ; 101 ; 101' ; 151 ; 151').

9. Elément de cuisson selon la revendication 8, **caractérisé en ce que** la nervure annulaire extérieure (20 ; 70 ; 70' ; 120 ; 170) est issue d'un bord supérieur (7 ; 57 ; 57' ; 107 ; 157) de la paroi latérale tubulaire (1 ; 1' ; 51 ; 51'; 101 ; 101'; 151 ; 151').

10. Elément de cuisson selon l'une des revendications 1 à 9, **caractérisé en ce que** la base (6 ; 56' ; 106 ; 156) est annulaire et **en ce que** l'organe de support interne (2 ; 52' ; 102 ; 152) porte un fond perforé (5 ; 55' ; 105 ; 155).

11. Elément de cuisson selon la revendication 10, **caractérisé en ce que** le fond perforé (5 ; 55' ; 105 ; 155) est amovible par rapport à la base (6 ; 56' ; 106 ; 156) annulaire.

12. Elément de cuisson selon la revendication 11, **caractérisé en ce que** le fond perforé (5 ; 55' ; 105 ; 155), respectivement la base (6 ; 56' ; 106 ; 156) annulaire, présente un organe de retenue (11 ; 111) prévu pour coopérer avec la base (6 ; 56' ; 106 ; 156) annulaire, respectivement avec le fond perforé (5 ; 55' ; 105 ; 155), lorsque le fond perforé (5 ; 55' ; 105 ; 155) repose sur l'organe de support interne (2 ; 52' ; 102 ; 152).

13. Elément de cuisson selon l'une des revendications 10 à 12, **caractérisé en ce que** l'organe de support interne (2 ; 52' ; 102 ; 152) est formé par un épaulement interne annulaire (10 ; 60' ; 110 ; 160).

14. Elément de cuisson selon l'une des revendications 1 à 9, **caractérisé en ce que** la base (6' ; 56 ; 106' ; 156') forme un fond perforé (5' ; 55 ; 105' ; 155').

15. Elément de cuisson selon l'une des revendications 1 à 14, **caractérisé en ce que** la paroi latérale tubulaire (1 ; 1' ; 51 ; 51' ; 101 ; 101' ; 151 ; 151') est réalisée en copolyester, tel que notamment le Tritan™, ou en SAN, ou en PMMA.

## Patentansprüche

1. Kochelement für Dampfgarer, aufweisend eine rohrförmige Seitenwand (1; 1'; 51; 51'; 101; 101'), die mit einer inneren Stützeinrichtung (2; 2'; 52; 52'; 102; 102') fest verbunden ist, in der mindestens eine Öffnung (3; 3'; 53; 53'; 103; 103') ausgebildet ist, die für den Durchtritt von Dampf vorgesehen ist, wobei die innere Stützeinrichtung (2; 2'; 52; 52'; 102; 102') zu einer Basis (6; 6 '; 56; 56'; 106; 106') gehört, die die rohrförmige Seitenwand (1; 1'; 51; 51'; 101; 101') trägt, wobei die Basis (6; 6'; 56; 56'; 106; 106') aus einem Material hergestellt ist, das für die Beständigkeit unter einer Biegebelastung bei einer Temperatur von 100 °C geeignet ist, wobei die rohrförmige Seitenwand (1; 1'; 51; 51'; 101; 101') zumindest teilweise aus transparentem Kunststoffmaterial hergestellt ist, **dadurch gekennzeichnet:**
- **dass** das transparente Kunststoffmaterial unter einer Biegebelastung bei einer Temperatur von weniger oder gleich 100 °C plastisch verformbar ist,
- und **dass** die rohrförmige Seitenwand (1; 1'; 101; 101') durch Umspritzen, Crimpen, Clipsen mit der Basis (6; 6'; 106; 106') zusammengesetzt ist.

2. Kochelement nach Anspruch 1, **dadurch gekennzeichnet, dass** die rohrförmige Seitenwand (1; 1'; 101; 101') Konformationen (12, 112) aufweist, die mindestens teilweise in die Basis (6; 6', 106; 106') eingeführt sind und/oder einen Teil der Basis (6; 6'; 106; 106') einschließen.

3. Kochelement nach Anspruch 1 oder 2, **dadurch gekennzeichnet, dass** die rohrförmige Seitenwand (1; 1'; 101; 101') interne oder externe Ausstülpungen (13; 113) aufweist, die die Basis (6; 6'; 106; 106') stützen.

4. Kochelement nach einem der Ansprüche 1 bis 3, **dadurch gekennzeichnet, dass** die Basis (56; 56') durch Verriegelung mit der rohrförmigen Seitenwand (51; 51') zusammengesetzt ist.

5. Kochelement nach Anspruch 4, **dadurch gekennzeichnet, dass** die rohrförmige Seitenwand (51; 51') äußere Ausstülpungen (65; 65') aufweist, die in Rückhaltenuten (66; 66') einer inneren Wand (67; 67') der Basis (56; 56') eingeführt sind.

6. Kochelement für Dampfgarer, aufweisend eine rohrförmige Seitenwand (151; 151'), die mit einer inneren Stützeinrichtung (152; 152') fest verbunden ist, in der mindestens eine Öffnung (153; 153') ausgebildet ist, die für den Durchtritt von Dampf vorgesehen ist, wobei die innere Stützeinrichtung (152; 152') zu einer Basis (156; 156') gehört, die die rohrförmige Seitenwand (151; 151') trägt, wobei die rohrförmige Seitenwand (151; 151') zumindest teilweise aus transparentem Kunststoffmaterial hergestellt ist, **dadurch gekennzeichnet:**
- **dass** das transparente Kunststoffmaterial unter einer Biegebelastung bei einer Temperatur von weniger oder gleich 100 °C plastisch verformbar ist,
- **dass** die Basis (156; 156') ein Gestell (190; 190') aufweist, das mit der röhrenförmigen Seitenwand (151; 151') verbunden ist, wobei das Gestell (190; 190') aus einem Material hergestellt ist, das für die Beständigkeit unter einer Biegebelastung bei einer Temperatur von 100 °C geeignet ist, wobei das Gestell (190; 190') zumindest teilweise das interne Stützelement (152; 152') bildet.

7. Kochelement nach Anspruch 6, **dadurch gekennzeichnet, dass** die rohrförmige Seitenwand (151; 151') und die Basis (156; 156') auf dem Gestell (190; 190') umspritzt sind.

8. Kochelement nach einem der Ansprüche 1 bis 7, **dadurch gekennzeichnet, dass** eine äußere ringförmige Nut (20; 70; 70'; 120; 170) die röhrenförmige Seitenwand (1; 1'; 51; 51'; 101; 101'; 151; 151') umgibt.

9. Kochelement nach Anspruch 8, **dadurch gekennzeichnet, dass** die äußere ringförmige Nut (20; 70; 70'; 120; 170) von einem oberen Rand (7; 57; 57'; 107; 157) der rohrförmigen Seitenwand (1; 1'; 51; 51'; 101; 101'; 151; 151') hervorgeht.

10. Kochelement nach einem der Ansprüche 1 bis 9, **dadurch gekennzeichnet, dass** die Basis (6; 56'; 106; 156) ringförmig ist, und dass die interne Stützeinrichtung (2; 52'; 102; 152) einen perforierten Boden (5; 55'; 105; 155) trägt.

11. Kochelement nach Anspruch 10, **dadurch gekennzeichnet, dass** der perforierte Boden (5; 55'; 105; 155) mit Bezug auf die ringförmige Basis (6; 56'; 106; 156) entfernbar ist.

12. Kochelement nach Anspruch 11, **dadurch gekennzeichnet, dass** der perforierte Boden (5; 55'; 105; 155) bzw. die ringförmige Basis (6; 56'; 106; 156) eine Rückhalteeinrichtung (11; 111) aufweist, die vorgesehen ist, um mit der ringförmigen Basis (6; 56'; 106; 156) bzw. mit dem perforierten Boden (5; 55'; 105; 155) zusammenzuwirken, während der perforierte Boden (5; 55'; 105; 155) auf der internen Stützeinrichtung (2; 52'; 102; 152) aufliegt.

13. Kochelement nach einem der Ansprüche 10 bis 12, **dadurch gekennzeichnet, dass** die interne Stützeinrichtung (2; 52'; 102; 152) durch einen internen ringförmigen Absatz (10; 60'; 110; 160) gebildet ist.

14. Kochelement nach einem der Ansprüche 1 bis 9, **dadurch gekennzeichnet, dass** die Basis (6'; 56; 106'; 156') einen perforierten Boden (5'; 55; 105'; 155') bildet.

15. Kochelement nach einem der Ansprüche 1 bis 14, **dadurch gekennzeichnet, dass** die rohrförmige Seitenwand (1; 1'; 51; 51'; 101; 101'; 151; 151') aus Copolyester, wie insbesondere Tritan™, oder aus SAN oder aus PMMA hergestellt ist.

## Claims

1. Cooking element for steam cooker, comprising a tubular side wall (1; 1'; 51; 51'; 101; 101') secured to an inner supporting member (2; 2'; 52; 52'; 102; 102') forming at least one opening (3; 3'; 53; 53'; 103; 103') designed to allow the passage of steam, the inner supporting member (2; 2'; 52; 52'; 102; 102') forming a part of a base (6; 6'; 56; 56'; 106; 106') supporting the tubular side wall (1; 1'; 51; 51'; 101; 101'), said base (6; 6'; 56; 56'; 106; 106') being made from a material capable of resisting bending under load at a temperature of 100°C, the tubular side wall (1; 1'; 51; 51'; 101; 101') being made at least partially from transparent plastic material, **characterised:**
- **in that** said transparent plastic material is plastically deformable by bending under load at a temperature of less than or equal to 100°C,
- and **in that** the tubular side wall (1; 1'; 101; 101') is assembled by cast moulding, crimping or clipping with the base (6; 6'; 106; 106').

2. Cooking element according to claim 1, **characterised in that** the tubular side wall (1; 1'; 101; 101') has conformations (12; 112) inserted at least partially into the base (6; 6'; 106; 106') and/or surrounding a portion of the base (6; 6'; 106; 106').

3. Cooking element according to either claim 1 or claim 2, **characterised in that** the tubular side wall (1; 1'; 101; 101') comprises inner or outer protrusions (13; 113) supporting the base (6; 6'; 106; 106').

4. Cooking element according to one of claims 1 to 3, **characterised in that** the base (56; 56') is assembled by locking with the tubular side wall (51; 51').

5. Cooking element according to claim 4, **characterised in that** the tubular side wall (51; 51') has outer protrusions (65; 65') inserted into retaining grooves (66; 66') of an inner wall (67; 67') of the base (56; 56').

6. Cooking element for steam cooker, comprising a tubular side wall (151; 151') secured to an inner supporting member (152; 152') forming at least one opening (153; 153') designed to allow the passage of steam, the inner supporting member (152; 152') forming a part of a base (156; 156') supporting the tubular side wall (151; 151'), the tubular side wall (151; 151') being made at least partially from transparent plastic material, **characterised:**
- **in that** said transparent plastic material is plastically deformable by bending under load at a temperature of less than or equal to 100°C,
- **in that** said base (156; 156') comprises a reinforcement (190; 190') connected to the tubular side wall (151; 151'), said reinforcement (190; 190') being made from a material capable of resisting bending under load at a temperature of 100°C, said reinforcement (190; 190') at least partially forming the inner supporting member (152; 152').

7. Cooking element according to claim 6, **characterised in that** the tubular side wall (151; 151') and the base (156; 156') are cast moulded on the reinforcement (190; 190').

8. Cooking element according to one of claims 1 to 7, **characterised in that** an outer annular rib (20; 70; 70'; 120; 170) surrounds the tubular side wall (1; 1'; 51; 51'; 101; 101'; 151; 151').

9. Cooking element according to claim 8, **characterised in that** the outer annular rib (20; 70; 70'; 120; 170) is derived from an upper edge (7; 57; 57'; 107; 157) of the tubular side wall (1; 1'; 51; 51'; 101; 101'; 151; 151').

10. Cooking element according to one of claims 1 to 9, **characterised in that** the base (6; 56'; 106; 156) is annular and **in that** the inner supporting member (2; 52'; 102; 152) supports a perforated bottom (5; 55'; 105; 155).

11. Cooking element according to claim 10, **characterised in that** the perforated bottom (5; 55'; 105; 155) is removable relative to the annular base (6; 56'; 106; 156).

12. Cooking element according to claim 11, **characterised in that** the perforated bottom (5; 55'; 105; 155), respectively the annular base (6; 56'; 106; 156), has a retaining member (11; 111) designed to engage with the annular base (6; 56'; 106; 156), respectively with the perforated bottom (5; 55'; 105; 155), when the perforated bottom (5; 55'; 105; 155) is at rest on the inner supporting member (2; 52'; 102; 152).

13. Cooking element according to one of claims 10 to 12, **characterised in that** the inner supporting member (2; 52'; 102; 152) is formed by an annular inner shoulder (10; 60'; 110; 160).

14. Cooking element according to one of claims 1 to 9, **characterised in that** the base (6'; 56; 106'; 156') forms a perforated bottom (5'; 55; 105'; 155').

15. Cooking element according to one of claims 1 to 14, **characterised in that** the tubular side wall (1; 1'; 51; 51'; 101; 101'; 151; 151') is made from copolyester, such as in particular Tritan™, or from SAN, or from PMMA.
